# EUROPEAN PATENT APPLICATION

(11) **EP 3 786 911 A1**
(43) Date of publication of application: **03.03.2021**
(21) Application number: 19194954.4
(22) Date of filing: 02.09.2019
(51) Int. Cl.: G07F 17/32, G09C 5/00

(54) **METHOD AND DEVICE FOR DISPLAYING SYMBOLS**

(71) Applicant: Yggdrasil Malta Ltd, SLM 1551 Sliema (MT)
(72) Inventor: Stoveld, David, St Julians, STJ 1081 (MT); Elmqvist, Fredrik, 08022 Barcelona (ES)
(74) Representative: Valea AB

(57) **Abstract**

Embodiments herein relate e.g. to a method for displaying a type of symbol and a number of symbols in a display area of a device, wherein the display area comprises a set number of display slots wherein a symbol of a type out of the number of symbols is displayed in a respective display slot. A first part of the set number of display slots are displayed with randomly selected symbols, and a second part of the set number of display slots is displayed with one or more secret symbols. The one or more secret symbols are transformed into more than one symbol, wherein the more than one symbols are selected taking the randomly selected symbols of the first part into account.

## Description

### TECHNICAL FIELD

Embodiments herein relate to a device and a method performed therein regarding displaying symbols. In particular, embodiments herein relate to displaying a type of symbol and a number of symbols in a display area of the device.

### BACKGROUND

There are numerous ways of displaying symbols in a display area of a device. In code generating apparatuses and/or gaming applications or gaming devices with a display area of a set size, for example, it is the size of the display area as well as the size of the symbols that limit the number of symbols displayed. In, e.g., a device using a gaming application such as a slot game, a matrix comprising a number of columns and rows of display slots limits the amount of symbols that may be displayed.

### SUMMARY

An object of embodiments herein is to increase possibilities of displaying symbols in a display area of a set size.

Embodiments herein achieve the object by providing a method for displaying a type of symbol and a number of symbols in a display area of a device, wherein the display area comprises a set number of display slots, and wherein a symbol of a type out of the number of symbols is displayed in a respective display slot. A first part of the set number of display slots with randomly selected symbols is displayed, and a second part of the set number of display slots is displayed with one or more secret symbols. Then, the one or more secret symbols are transformed into more than one symbol, wherein the more than one symbols are selected taking the randomly selected symbols of the first part into account.

Embodiments herein achieve the object by providing a device configured to display a type of symbol and a number of symbols in a display area of the device, wherein the display area comprises a set number of display slots wherein a symbol of a type out of the number of symbols is displayed in a respective display slot. The device is configured to display a first part of the set number of display slots with randomly selected symbols; and a second part of the set number of display slots with one or more secret symbols. The device is further configured to transform the one or more secret symbols into more than one symbol, wherein the more than one symbols are selected taking the randomly selected symbols of the first part into account.

It is furthermore provided herein a computer program product comprising instructions, which, when executed on at least one processor, cause the at least one processor to carry out the method above, as performed by the device. It is additionally provided herein a computer-readable storage medium, having stored thereon a computer program product comprising instructions which, when executed on at least one processor, cause the at least one processor to carry out the method above, as performed by the device.

According to embodiments herein the manner of transforming a secret symbols into more than one symbol and/or reducing size and how these symbols are displayed allows the number of symbols displayed to increase within the display area. Furthermore, since the more than one symbol revealed by the secret symbol are selected taking the randomly selected symbols of the first part into account, the number of consecutive same type of symbols are increased, thereby increasing the number of consecutive symbols vertically, horizontally, and/or diagonally. The displayed symbols may further increase in size when transformed and/or stretch over a number of display slots. Thus, embodiments herein increase the number and/or size of symbols in a display area of a certain size.

### BRIEF DESCRIPTION OF THE DRAWINGS

Embodiments will now be described in more detail in relation to the enclosed drawings, in which:
- Fig. 1: is a schematic overview depicting a display area displaying symbols according to embodiments herein;
- Fig. 2: is a schematic overview depicting a display area displaying symbols according to embodiments herein;
- Fig. 3: is a schematic overview depicting a display area displaying symbols according to embodiments herein;
- Fig. 4: is a schematic overview depicting a method performed by a device according to embodiments herein;
- Fig. 5A: is a schematic overview depicting a display area displaying symbols according to embodiments herein;
- Fig. 5B: is a schematic overview depicting a display area displaying symbols according to embodiments herein;
- Fig. 6: is a schematic overview depicting a display area displaying symbols according to embodiments herein;
- Fig. 7: is a block diagram depicting a device according to embodiments herein.

### DETAILED DESCRIPTION

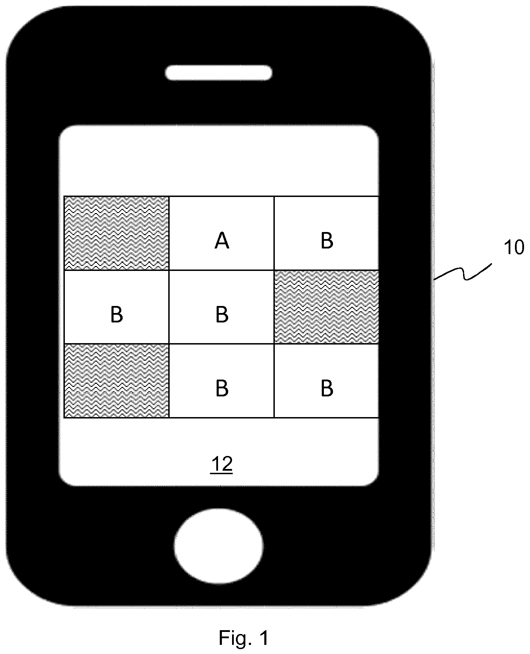

**Fig. 1** is a schematic overview depicting a display area displaying symbols according to embodiments herein. Embodiments herein relate to **a device 10** exemplified herein as a wireless device such as a mobile station, a non-access point (non-AP) station (STA), a STA and/or a wireless terminal, is comprised communicating via e.g. one or more Access Networks (AN), e.g. radio access network (RAN), to one or more core networks (CN). It should be understood by the skilled in the art that "device" is a non-limiting term which means any terminal, wireless communications terminal, user equipment, narrowband internet of things (NB-loT) device, Machine Type Communication (MTC) device, Device to Device (D2D) terminal, or node e.g. smart phone, laptop, mobile phone, sensor, relay, mobile tablets or even a small base station capable of communicating using radio communication with a radio network node within an area served by a radio network node.

The device 10 comprises **a display area 12** of a set size. I.e., the display area comprises a set number of display slots. The display area 12 may comprise a matrix of display slots displaying symbols of a number of reels, also referred to as a number of columns. Each reel or column comprises a number of rows of display slots. In the illustrated example the type of symbols are letters, however the type of symbols may e.g. be numbers, roses, stars, unicorns, figures or similar. The columns comprise three display slots and the display area may display three columns of display slots. A first secret symbol is displayed in a first position e.g. the first column and first row. Symbol A is displayed in a display slot in the second column and first row. The symbol B is displayed in a display slot in the third column and first row. Furthermore the symbol B is displayed in a display slot in the second row in the first and second columns. A second secret symbol is displayed in a display slot in the third column and the second row. A third secret symbol is displayed in a third position e.g. the first column and third row. The symbol B is displayed in display slots in the second column and third row, and in the third column and third row. According to embodiments herein, each of the secret symbols transforms to more than one symbol, wherein the more than one symbols are selected taking the symbols of the display area into account. Thus, the number of consecutive symbols may be increased vertically, diagonally, and/or horizontally as compared to the display slots of the display area of a set size. The secret symbol may also be denoted as mystery symbol, hidden symbol or similar.

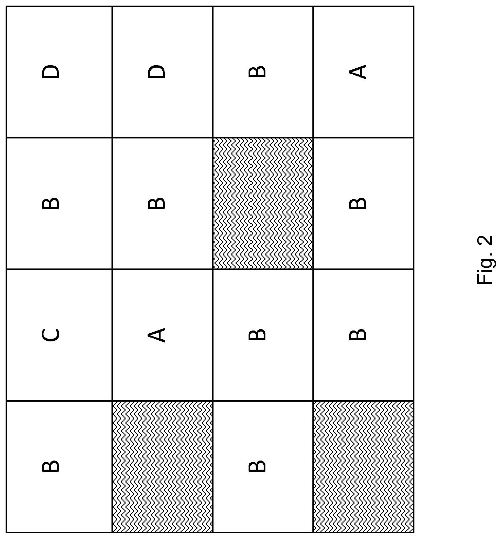

**Fig. 2** shows a display area comprising a four times four matrix of display slots. A number of randomly selected symbols, illustrated as letters, e.g. A,B, C, D in the Figure, are displayed in a first number of display slots out of the total amount of display slots. The first number of display slots is also referred to as a first part of the set number of display slots. A first secret symbol is displayed in a first display slot, e.g., a display slot positioned at a first column and second row. A second secret symbol is displayed in a second display slot, e.g., a display slot positioned at a first column and a fourth row. A third secret symbol is displayed in a third display slot, e.g., a display slot positioned at a third column and a third row. Thus, secret symbols are displayed in a second part of the display slots.

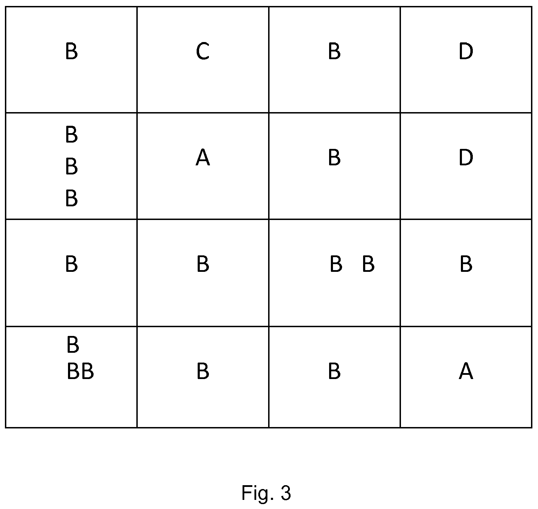

**Fig. 3** shows the display area wherein each secret symbol is transformed into a plurality of symbols, also referred to as split symbols. The transformation takes into account the type of symbols displayed in adjacent display slots of the display slots comprising the secret symbols. Thus, each secret symbol may be transformed into more than one symbol, wherein the more than one symbols may be selected based on the type of symbols of adjacent display slots. E.g. the first secret symbol is transformed into three symbols, vertically arranged, being of the same type as the symbol of the display slot positioned adjacently or next above the display slot of the first secret symbol. The second secret symbol is transformed into three symbols, vertically and horizontally arranged, being of the same type as the symbol of the display slots positioned adjacently or next above and adjacently or next to the right of the second secret symbol. The third secret symbol is transformed into two symbols, horizontally arranged, being of the same type as the symbol of orthogonally adjacent display slots e.g. positioned above, below and/or to the left or right of the third secret symbol. Thus, the number of consecutive symbols displayed, i.e. symbols in a row vertically and horizontally, are increased in the display area.

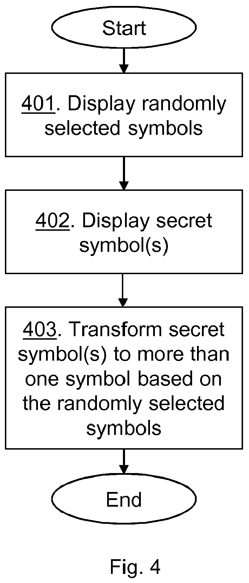

The method actions performed by the device 10 for displaying a type of symbol and a number of symbols in a display area of the device 10 according to embodiments will now be described with reference to a flowchart depicted in **Fig. 4**. The display area comprises a set number of display slots wherein a symbol of a type out of the number of symbols is displayed in a respective display slot. The set number of display slots may be arranged in a first number of rows and a second number of columns, also referred to as a matrix of display slots.The actions do not have to be taken in the order stated below, but may be taken in any suitable order.

**Action 401**. The device 10 displays a first part of the set number of display slots with randomly selected symbols. E.g. randomly selected symbols in a number of display slots out of the total number of display slots of the display area.

**Action 402**. The device 10 displays a second part of the set number of display slots with one or more secret symbols. E.g. the device 10 displays secret symbol(s) in a second number of display slots out of the total number of display slots of the display area. I.e., the display slots not displaying randomly selected symbols.

**Action 403**. The device 10 transforms the one or more secret symbols into more than one symbol, wherein the more than one symbols are selected taking the randomly selected symbols of the first part into account. The device 10 may transform the one or more secret symbols by displaying the more than one symbols vertically, diagonally and/or horizontally in the display area. The device 10 may transform the one or more secret symbols by expanding the more than one symbol over more than one display slot. E.g., the device 10 may expand the more than one symbol by pushing adjacent symbols vertically or horizontally into different display slots. The more than one symbols may be selected as a type of one or more adjacent symbols increasing the number of symbols of that type. E.g., the split symbols revealed matches symbols of adjacent display slots. It should be noted that embodiments herein may reveal both what the symbol is and the amount of symbols. The device 10 may, e.g., reveal both the type of symbol and number of symbols at the same time OR first communicate how many of these symbols that the secret symbols will reveal, building up an anticipation until finally revealing the type of symbols, or even revealing the number and type of symbol one at a time from left to right to build suspense on how many symbols there will be after knowing what the symbol is. E.g., once the first split symbol is open it is known that the rest of the split symbols are the same, so it is a matter of how many secret symbols will be revealed next. The device 10 may transform the one or more secret symbols by displaying more than one symbol of increased or reduced size, thus increasing the number of symbols in the display area.

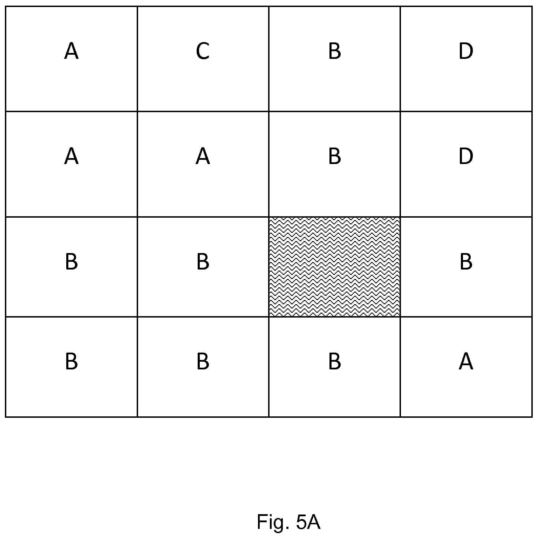

**Fig. 5A** is a schematic overview of a display area comprising a four times four matrix of display slots. A number of randomly selected symbols, illustrated as letters e.g. A, B, C, D in the Figure, are displayed in a first number of display slots out of the total amount of display slots. The first number of display slots is also referred to as the first part of the set number of display slots. A secret symbol, e.g. a fourth secret symbol, is displayed in a display slot e.g. a display slot positioned at a third column and third row.

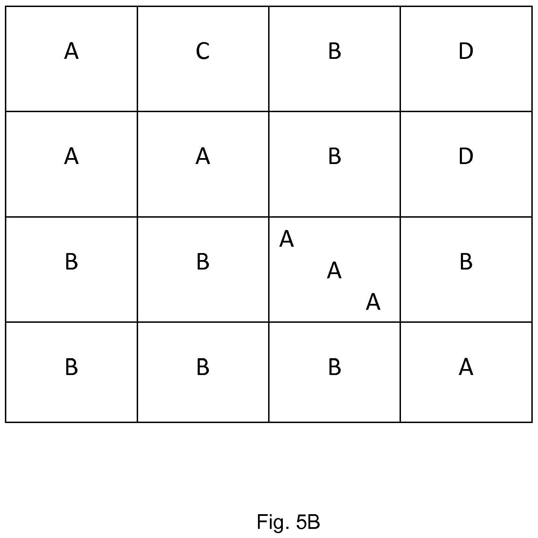

**Fig. 5B** shows the display area wherein the secret symbol is transformed into split symbols. The transformation takes into account the type of symbols displayed in adjacent display slots of the display slot comprising the secret symbol. E.g., the fourth secret symbol is transformed into three symbols, diagonally arranged, being of the same type as the symbol of the display slots positioned diagonally adjacent the display slot of the fourth secret symbol. Thus, the number of consecutive symbols displayed, i.e., symbols in row diagonally are increased in the display area.

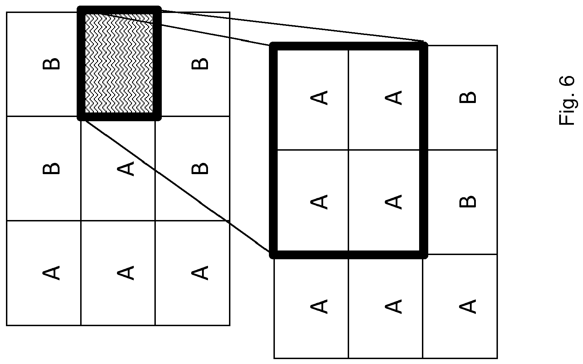

It should be noted that the display area may change via features in the transformation process, i.e. during or before splitting and revealing the symbols of the secret symbol, to add more dynamic modes of transforming the secret symbols. For example, after a secret symbol is displayed, the secret symbol may cover more than one display slot and take up more space, like an expanding secret symbol that is displayed in one symbol position and the secret symbol expands to cover a number of display slots, e.g. four display slots, and then after the feature of expanding, the secret symbol is split into a number of symbols e.g. four A symbols. This is displayed in **Fig. 6**. Embodiments herein may create a mechanism on a gaming application. Small split symbols inside of the secret symbol may grow out to be normal size. The transformed display slots are created as a result of pushing out the columns and/or rows so that the split symbols have room to grow to normal size.

Also, this manner of taking a mechanical action and having it result in completely different properties (more ways, longer lines, bigger reels) are also covered by embodiments herein. These features may all be done with the disclosed mechanism i.e..the use of the secret symbol, and the use of the secret symbol creates a higher level layer to be able to see all these in a different form - the pattern in all of them is to get these special split display symbols and hope for as many splits as possible. The player is not sure how the mechanism will do it in each game until he/she witnesses the split fused to different game types. Thus, the one or more features of enlarging, display plurality of split symbols and so on may be randomly selected.

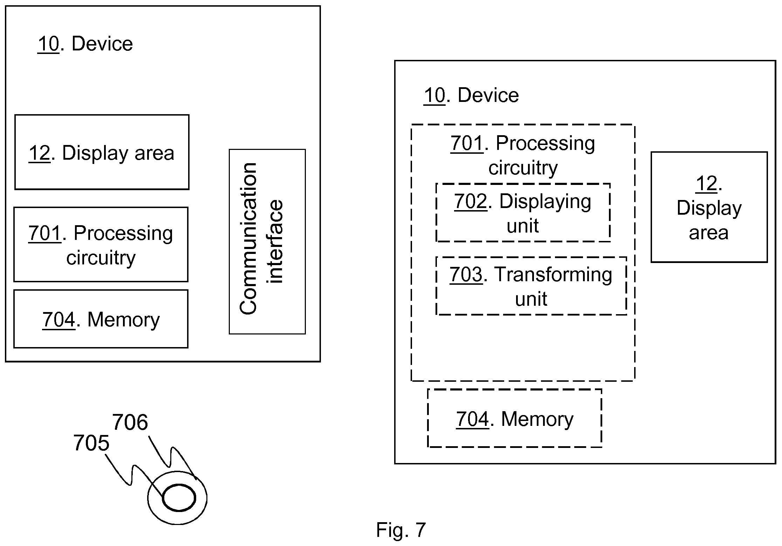

**Fig. 7** is a block diagram depicting the device, in two embodiments. The device 10 is configured to display the type of symbol and the number of symbols in the display area of the device 10. The display area comprises a set number of display slots wherein a symbol of a type out of the number of symbols is displayed in a respective display slot. The set number of display slots may be arranged in a matrix such as the first number of rows and the second number of columns. The device 10 comprises **a display area 12**, e.g. a liquid crystal display (LCD).

The device 10 may comprise **processing circuitry 701**, e.g. one or more processors, configured to perform the methods herein.

The device 10 may comprise a **displaying unit 702**, an image creating unit, a display or similar. The device 10, the processing circuitry 701 and/or the displaying unit 702 is configured to display the first part of the set number of display slots with randomly selected symbols. The device 10, the processing circuitry 701 and/or the displaying unit 702 is configured to display the second part of the set number of display slots with one or more secret symbols.

The device 10 may comprise **a transforming unit 703**, an image creating unit, a display or similar. The device 10, the processing circuitry 701 and/or the transforming unit 703 is configured to transform the one or more secret symbols into more than one symbol, wherein the more than one symbols are selected taking the randomly selected symbols of the first part into account. The device 10, the processing circuitry 701 and/or the transforming unit 703 may be configured to transform the one or more secret symbols by displaying more than one symbols vertically, diagonally and/or horizontally in the display area. The device 10, the processing circuitry 701 and/or the transforming unit 703 may be configured to transform the one or more secret symbols by expanding the more than one symbol over more than one display slot. The device 10, the processing circuitry 701 and/or the transforming unit 703 may be configured to expand the more than one symbol by pushing adjacent symbols vertically or horizontally into different display slots. Pushing herein means replacing the adjacent symbol and move the adjacent symbol to a next display slot. The more than one symbols may be selected as a type of one or more adjacent symbols increasing the number of symbols of that type.

The device 10 further comprises **a memory 704**. The memory 704 comprises one or more units to be used to store data on, such as type of symbols, symbols, secret symbols and applications to perform the methods disclosed herein when being executed, and similar. Furthermore, the device 10 may comprise a communication interface, such as comprising a transmitter, a receiver and/or a transceiver.

The methods according to the embodiments described herein for the device 10 are respectively implemented by means of e.g. **a computer program product 705** or a computer program, comprising instructions, i.e., software code portions, which, when executed on at least one processor, cause the at least one processor to carry out the actions described herein, as performed by the device 10. The computer program product 705 may be stored on **a computer-readable storage medium 706**, e.g. a disc, a universal serial bus (USB) stick or similar. The computer-readable storage medium 706, having stored thereon the computer program product, may comprise the instructions which, when executed on at least one processor, cause the at least one processor to carry out the actions described herein, as performed by the device 10. In some embodiments, the computer-readable storage medium may be a transitory or a non-transitory computer-readable storage medium. Thus, embodiments herein may disclose a device for displaying symbols in a display area, wherein the device comprises processing circuitry and a memory, said memory comprising instructions executable by said processing circuitry whereby said device is operative to perform any of the methods herein.

In some embodiments the non-limiting term device is used and it refers to any type of wireless device or user equipment (UE) communicating with a network node and/or with another device in a cellular or mobile communication system. Examples of the device are device to device (D2D) UE, proximity capable UE, machine type UE or UE capable of machine to machine (M2M) communication, Tablet, mobile terminals, smart phone, laptop embedded equipped (LEE), laptop mounted equipment (LME), USB dongles etc.

As will be readily understood by those familiar with communications design, that functions, means or circuits may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a device, for example.

Alternatively, several of the functional elements of the processing circuitry discussed may be provided through the use of dedicated hardware, while others are provided with hardware for executing software, in association with the appropriate software or firmware. Thus, the term "processor" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims and their legal equivalents.

## Claims

1. A method for displaying a type of symbol and a number of symbols in a display area of a device (10), wherein the display area comprises a set number of display slots wherein a symbol of a type out of the number of symbols is displayed in a respective display slot, the method comprising:
- displaying (401) a first part of the set number of display slots with randomly selected symbols;
- displaying (402) a second part of the set number of display slots with one or more secret symbols; and
- transforming (403) the one or more secret symbols into more than one symbol,
wherein the more than one symbols are selected taking the randomly selected symbols of the first part into account.

2. The method according to claim 1, wherein transforming the one or more secret symbols comprises displaying more than one symbol vertically, diagonally and/or horizontally in the display area.

3. The method according to any of claims 1-2, wherein transforming the one or more secret symbols comprises expanding the more than one symbol over more than one display slot.

4. The method according to claim 3, wherein expanding the more than one symbol comprises pushing adjacent symbols vertically or horizontally into different display slots.

5. The method according to any of claims 1-4, wherein the set number of display slots are arranged in a first number of rows and a second number of columns.

6. The method according to any of claims 1-5, wherein the more than one symbols are selected as a type of one or more adjacent symbols increasing the number of symbols of that type.

7. A device (10) for displaying a type of symbol and a number of symbols in a display area (12) of the device (10), wherein the display area (12) comprises a set number of display slots wherein a symbol of a type out of the number of symbols is displayed in a respective display slot, wherein the device (10) is configured to:
display a first part of the set number of display slots with randomly selected symbols;
display a second part of the set number of display slots with one or more secret symbols; and
transform the one or more secret symbols into more than one symbol, wherein the more than one symbols are selected taking the randomly selected symbols of the first part into account.

8. The device according to claim 7, wherein the device is configured to transform the one or more secret symbols by displaying more than one symbol vertically, diagonally and/or horizontally in the display area.

9. The device according to any of claims 7-8, the device is configured to transform the one or more secret symbols by expanding the more than one symbol over more than one display slot.

10. The device according to claim 9, wherein expanding the more than one symbol comprises pushing adjacent symbols vertically or horizontally into different display slots.

11. The device according to any of claims 7-10, wherein the set number of display slots is arranged in a first number of rows and a second number of columns.

12. The device according to any of claims 7-11, wherein the more than one symbols are selected as a type of one or more adjacent symbols increasing the number of symbols of that type.

13. A computer program product comprising instructions, which, when executed on at least one processor, cause the at least one processor to carry out the method according to any of the claims 1-6, as performed by the device.

14. A computer-readable storage medium, having stored thereon a computer program product comprising instructions which, when executed on at least one processor, cause the at least one processor to carry out the method according to any of the claims 1-6, as performed by the device.
